# EUROPEAN PATENT APPLICATION

(11) **EP 4 700 617 A1**
(43) Date of publication of application: **25.02.2026**
(21) Application number: 24195172.2
(22) Date of filing: 19.08.2024
(51) Int. Cl.: G06F 21/32, G06F 21/62, H04L 9/32, H04L 9/40

(54) **AUTHENTICATION SYSTEM, AUTHENTICATION METHOD, AND COMPUTER READABLE MEDIUM**

(71) Applicant: Van, David, New Taipei City 220 (TW)
(72) Inventor: Van, David, New Taipei City 220 (TW)
(74) Representative: Straus, Alexander

(57) **Abstract**

An authentication system has a user device, a client device, a provider verification device, and a storage device. The authentication system operates user authentication operation without preserving of biometric data based on zero-knowledge proof, such that exchange of sensitive or personal data involved in cloud services can be de-identified, achieve simplification for user authentication operation and reduce risk of authentication information required for user authentication operation being leaked to or identified by a third party. An authentication method and computer readable medium may be implemented by the user device, the client device, the provider authentication device, and the storage device of the authentication system.

## Description

### Field of the Invention

The invention is related to authentication techniques, especially to an authentication system, authentication method, and computer readable medium.

### Background of the Invention

Software as a Service (SaaS) application technology has become one of the development focal tasks for digital transformation in various industries. Taking the financial industry as an example, development of financial Software as a Service may brought about the following benefits: eliminating hardware and location restrictions and enabling high availability for customers and users in need of providing and/or accessing financial services; provide high scalability to expand application scope of financial Software as a Service under allowed resources; and enable independent operation of financial Software as a Service from software and hardware maintenance schedules for customers and users in need of continuously providing and/or accessing financial services.

However, financial services often involve exchange of various sensitive or personal data, it is necessary to ensure identity of user before allowing financial services to be accessed. Moving financial services to the cloud may also cause authentication data of user provided during user authentication to be leaked or identified by a third party, further causing security and legal issues.

Therefore, there is an unmet need in the field to establish an authentication system, an authentication method, and computer readable medium to tackle the above problems.

### Summary of the Invention

An authentication system may include a provider authentication device, a storage device coupled to the provider authentication device, an user device coupled to the provider authentication device, and a client device coupled to the provider authentication device and the user device. During an enrolling phase with the authentication system: the user device is configured to confirm enrollment request of an user, and transmit the enrollment request to the client device; the client device is configured to receive the enrollment request, generate enrollment dataset according to the enrollment request, the enrollment dataset comprises user enrollment identifier and first biometric data of the user, and transmit the enrollment dataset to the provider authentication device; the provider authentication device is configured to receive the enrollment dataset, process the first biometric data of the enrollment dataset to generate first tokenized biometric data, concatenate the user enrollment identifier with the first tokenized biometric data to generate authentication baseline data, store the authentication baseline data to the storage device and erase the first biometric data from the enrollment dataset and the storage device is configured to preserve the authentication baseline data. During an authentication phase with the authentication system: the user device is configured to receive service access request and second biometric data of the user, transmit the service access request to the client device, and transmit the second biometric data to the provider authentication device. The client device is configured to receive the service access request, and transmit identity identifier of the user to the provider authentication device according to the service access request; and the provider authentication device is configured to receive the identity identifier and retrieve the authentication baseline data from the storage device according to the identity identifier, the user enrollment identifier of the authentication baseline data correspond to the identity identifier, receive the second biometric data, process the second biometric data to generate second tokenized biometric data, concatenate the second tokenized biometric data with the identity identifier to generate authentication data, and when an authentication result for authenticating the authentication data using the authentication baseline data is successful, authorize the service access request from the user device and erase the second biometric data.

An authentication method may include providing an authentication system, the authentication system comprises an user device, a client device, a provider authentication device and a storage device, during an enrollment phase: the user device confirming enrollment request of an user, and transmitting the enrollment request to the client device; the client device receiving the enrollment request, generating enrollment dataset according to the enrollment request and transmitting the enrollment dataset to the provider authentication device, wherein the enrollment dataset comprises user enrollment identifier and first biometric data of the user; the provider authentication device receiving the enrollment dataset, processing the first biometric data of the enrollment dataset to generate first tokenized biometric data, concatenating the user enrollment identifier and the first tokenized biometric data to generate authentication baseline data, storing the authentication baseline data in the storage device and erasing the first biometric data from the enrollment dataset; and the storage device preserving the authentication baseline data; and during an authentication stage: the user device receiving service access request and second biometric data of the user, transmitting the service access request to the client device, and transmitting the second biometric data to the provider authentication device; the client device receiving the service access request, transmitting the identity identifier of the user to the provider authentication device according to the service access request; and the provider authentication device receiving the identity identifier, retrieving the authentication baseline data from the storage device according to the identity identifier, receiving the second biometric data, processing the second biometric data to generate second tokenized biometric data, concatenating the second tokenized biometric data and the identity identifier to generate authentication data, and confirming authentication result for authenticating the authentication data using the authentication baseline data, and approving the service access request from the user device and erasing the second biometric data when the authentication result indicates to be successful, wherein the user enrollment identifier of the authentication baseline data correspond to the identity identifier.

A computer readable medium storing a computer executable code, upon executed, the computer executable code implement the authentication method.

### Brief Description of the Drawings

FIG. 1 is a schematic diagram illustrating element arrangements of authentication system of the present invention.
FIG. 2 is a flow diagram illustrating enrollment phase for authentication method of the present invention.
FIG. 3 is a flow diagram illustrating authentication phase for authentication method of the present invention.

### Detailed Description

The following descriptions of the embodiments illustrate implementations of the present invention, and those skilled in the art of the present invention can readily understand the advantages and effects of the present invention and/or apply the present invention to other embodiments in accordance with the contents herein. Therefore, any factors described in the present invention may be combined with any other factors disclosed in embodiments of the present invention.

The orders of drawings shown in accompanying drawings of this disclosure are only used to illustrate embodiments described herein, such that those with ordinary skill in the art can read and understand the present invention therefrom, of which are not intended to limit the scope of this disclosure. Any changes, modifications, or adjustments of said features, without affecting the designed purposes and effects of the present invention, should all fall within the scope of technical content of this disclosure.

As used herein, when describing an object "comprises," "includes" or "has" a limitation, unless otherwise specified, it may additionally encompass other elements, structures, regions, parts, apparatus, devices, systems, steps, connections, modules, units, et cetera, and should not exclude others.

The terms "first," "second," et cetera, used herein are simply used to describe or distinguish elements such as components, structures, regions, parts, apparatus, devices, systems, steps, connections, modules, units, et cetera, rather than used to limit the scope of implementation of the present disclosure or to limit the spatial order of the elements. Further, unless otherwise specified, wordings in singular forms such as "a," "an" and "the" also pertain to plural forms, and wordings such as "or" and "and/or" may be used interchangeably.

As used herein, the term "authentication" may be interchangeable with likes of "confirm," "authorization," "judgment," "determination," "examination," "evaluation," "ratify," "verification," and "inspection." During an event to authenticate a piece of message, data or command, phrases such as "data authentication," "authenticate command," "confirm data," or "confirm command" may be expressed.

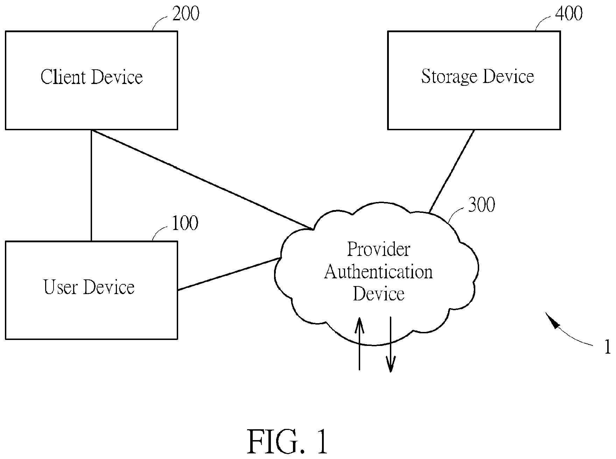

FIG. 1 is schematic diagram illustrating element arrangements of an authentication system 1. The authentication system 1 may include a user device 100, a client device 200, a provider authentication device 300 and storage device 400. Each element of the authentication system may be coupled to each other via any suitable wired or wireless manners. In the embodiments described herein, provider may refer to cloud service provider that provides financial Software as a Service applications, client may refer to financial institution that subscribes to the provider for financial Software as a Service applications, and user may refer to any individual, organization or group that requests access to financial services from the client. The authentication system 1 may be used to execute user authentication operations via integrated financial Software as a Service applications and enable user to access financial service from the client upon successful authentication. However, the authentication system 1 may also be applied to user authentication operations for Software as a Service applications under other industrial fields, and the service provided by the client may also refer to other services under other industrial fields.

The user device 100 may be realized as any device for accessing financial service, such as a personal computer, a tablet, a mobile device, an application, a virtual machine, or any combination thereof. In the embodiments described herein, the user device 100 may include an automated teller machine and/or a mobile device carrying financial service application, and may be used to access financial service through operation on the user device 100 by the user.

The client device 200 may be realized as a device for providing financial service to the user through integrated Software as a Service application, such as a mainframe computer, a personal computer, a tablet, a mobile device, a cloud computing equipment, an application, a server, a virtual machine, or any combination thereof. In the embodiments described herein, a client may integrate the financial Software as a Service application into the client device 200 after subscribing to the financial Software as a Service application, so as to provide financial service to the user.

The provider authentication device 300 may be realized as any device for executing user authentication operations, such as a mainframe computer, a personal computer, a tablet, a mobile device, a cloud computing equipment, an application, a server, a virtual machine, or any combination thereof. In the embodiments described herein, the user authentication operation performed by the provider authentication device 300 may be integrated as part of the financial Software as a Service application, or act as additional items in the financial Software as a Service application provided by the provider. The user authentication operation may only be integrated into the financial service upon additional subscription established by the client to the provider.

Storage device 400 may be realized as any suitable cloud storage device, server, memory, database, and/or hard drive. In the embodiments described herein, the storage device 400 may be used to store data generated from performing the user authentication operation, and may also be used to provide data required for performing the user authentication operation. In some other embodiments, the storage device 400 may be managed by the provider or the client.

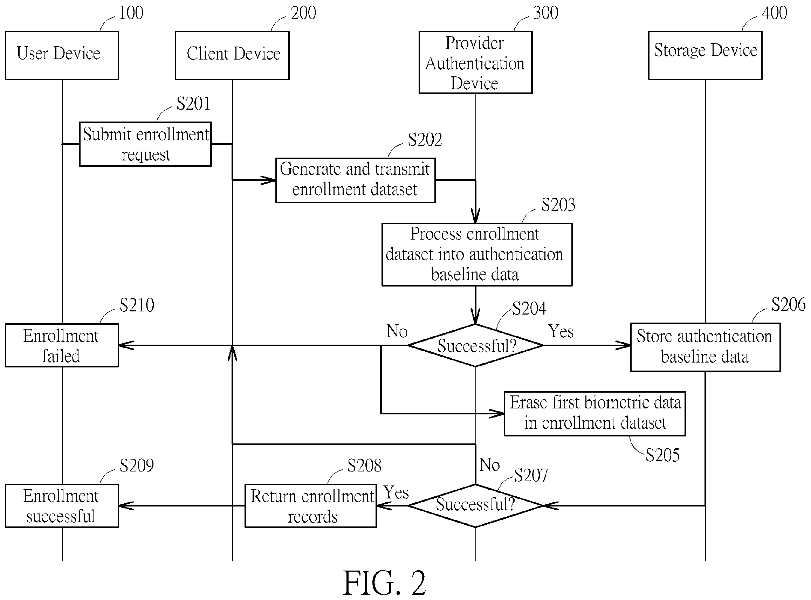

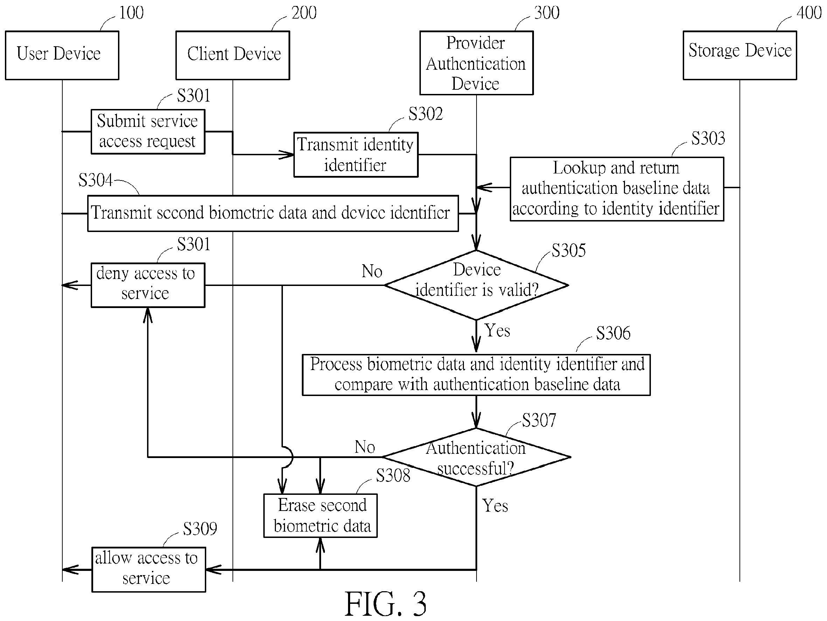

In some embodiments, an authentication method may be further provided. The authentication method may be used to realize the user authentication operation using the user device 100, the client device 200, the provider authentication device 300 and the storage device 400. The authentication method may include an enrollment phase and an authentication phase. The details of the authentication method may be understood through FIG. 2, FIG. 3 and the following description.

Moreover, a computer readable medium may be provided, which may store a computer executable code. The computer executable code may be sued to implement the authentication method upon being executed.

FIG. 2 is a flow diagram illustrating Step S201 to Step S2010 of the enrollment phase, where execution subject for the steps and data transmitting direction may be understood through position relationships between arrow directions, steps, the user device 100, the client device 200, the provider authentication device 300 and the storage device 400.

At Step S201, user device 100 may submit enrollment request to the client device 200. In here, the user in need of financial service can operate the user device 100 to input enrollment data and first biometric information. The enrollment request may be bank account enrollment request. The first biometric data may be at least one of facial recognition information of the user, fingerprint recognition information of the user, vein recognition information of the user, voice pattern recognition information of the user, iris recognition information of the user, and signature recognition information of the user, and the first biometric data may be obtained through operation of camera lens, sensing panel, microphone and/or scanning instrument of the user device 100 by the user.

At Step S202, the client device 200 may receive the enrollment request, the enrollment data and the first biometric data from the user device 100, generate enrollment dataset according to the enrollment request, and transmit the enrollment dataset to the provider authentication device 300. In here, the client device 200 may generate user enrollment identifier corresponding to the user according to content of the enrollment data, pack the user enrollment identifier and the first biometric data into the enrollment dataset, and transmit the enrollment dataset to the provider authentication device 300. The user enrollment identifier may be a code formed by characters, numbers, letters and/or symbols in any format, which may be used to represent identity of the user during the user authentication operation and to distinguish the user from other users using the financial service.

At Step S203, the provider authentication device may receive the enrollment dataset, process the first biometric data of the enrollment dataset to generate first tokenized biometric data, and concatenate the user enrollment identifier with the first tokenized biometric data to generate authentication baseline data. In here, the first biometric data can be transformed (tokenized) into de-identified homogeneous data through any data tokenization technique, thereby to obtain the first tokenized biometric data. Utilization of data tokenization technique for transforming the first biometric data is beneficial for substituting sensitive data in risk of leaking user privacy to unique identification symbols, retaining necessary information contained in the first biometric data, and protecting user privacy while performing user authentication operation using the first tokenized biometric data. Other de-identification operations and/or encryption operations may also be performed on the first biometric data to obtain the first tokenized biometric data to further ensure security of the first biometric data during the identity authentication task. In addition, the authentication baseline data generated from Step S203 may be formed by splicing the user enrollment identifier and the first tokenized biometric data in any order or combination, and may be used as comparison baseline for authenticating the authentication data uploaded during the authentication phase. For example, if the user enrollment identifier is expressed as "USRID1235XX" and the first tokenized biometric data is expressed as "USRIMG2468XX", the generated authentication baseline data may be expressed as "USRID1235XX-USRIMG2468XX."

At Step S204, the provider authentication device 300 may determine if generation for the authentication baseline data is successful. "No" indicates that generation for the authentication baseline data has failed, Step S205 may then be executed to erase the first biometric data from the enrollment dataset, and Step S210 may be executed to convey (exempli gratia, through the client device 200) rejection notice of enrollment request for the user to the user device 100. "Yes' indicates that generation for the authentication baseline data is successful, Step S206 may then be executed to store the authentication baseline data to the storage device 400. The first biometric data will be erased after utilization whether generation of the authentication baseline data is successful or not. Therefore, the system 1 may only preserve the de-identified first tokenized biometric data without preserving the first biometric data, so as to achieve zero-knowledge proof for user authentication operation and prevent leaking of privacy of the user.

At Step S207, the provider authentication device 300 may determine if storage for the authentication baseline data at the storage device 400 is successful. "No" indicates that storage for the authentication baseline data has failed, Step S210 may then be executed to convey (exempli gratia, through the client device 200) rejection notice of enrollment request for the user to the user device 100. "Yes' indicates that storage for the authentication baseline data is successful, Step S208 may then be executed to return enrollment record to the client device 200, and Step S209 may be executed to convey (exempli gratia, through the client device 200) approval notice of enrollment request for the user to the user device 100. The enrollment record returned during Step S208 may include the user enrollment identifier of the enrollment dataset. The client device 200 may also store the user enrollment identifier (exempli gratia, in built-in memory of the client device 200) for accordingly identify and store related data for the user during access to the financial service.

FIG. 3 is a flow diagram illustrating Step S301 to Step S310 of the authentication phase, where execution subject for the steps and data transmitting direction may be understood through position relationships between arrow directions, steps, the user device 100, the client device 200, the provider authentication device 300 and the storage device 400.

At Step S301, the user device 100 may submit service access request to the client device 200. In here, the user in need of financial service can operate the user device 100 to input service access data. The service access data may include at least one of username of the user, user passcode of the user, identity information of the user, signature information of the user, debit card identifier of the user, debit card certificate number of the user, payment request information of the user, collection request information of the user, deposit/foreign exchange request information of the user, loan request information of the user, account management request of the user, transaction information of the user and financial management request of the user, and the service access data may be input through operation of input window displayed by the user device 100, built-in card slot of the user device 100, external/attached scanner instruments of the user device 100 by the user.

At Step S302, the client device 200 may receive the service access request and service access data from the user device 100, generate identity identifier of the user according to the service access data, and transmit identity identifier to the provider authentication device 300. If the client device 200 has already stored user enrollment identifier of the user from a successful enrollment, the identity identifier may be generated by retrieving a corresponding user enrollment identifier according to the service access data, and output the user enrollment identifier to act as the identity identifier. If the client device 200 has not pre-store the user enrollment identifier, the identity identifier may be generated from content of the service access data, and may be a code formed by characters, numbers, letters and/or symbols in any format, where format of the identity identifier may be the same as the user enrollment identifier.

At Step S303, the provider authentication device 300 may retrieve the authentication baseline data from the storage device 400 according to the identity identifier. In here, the storage device 400 may retrieve the authentication baseline data having the user enrollment identifier corresponding to the identity identifier and return the authentication baseline data to the provider authentication device 300. For example, if the identity identifier received at the provider authentication device 300 is expressed as "USRID1235XX" and one piece of the authentication baseline data stored at the storage device 400 is expressed as "USRID1235XX-USRIMG2468XX," the storage device 400 may return that piece of authentication baseline data back to the provider authentication device 300 for authentication in later steps.

At Step S304, the provider authentication device 300 may receive the authentication baseline data, and request (exempli gratia, through the client device 200) the user to upload the second biometric data and the device identifier of the user device 100. The second biometric data may include at least one of facial recognition information of the user, fingerprint recognition information of the user, vein recognition information of the user, voice pattern recognition information of the user, iris recognition information of the user and signature recognition information of the user, and the second biometric data may be obtained through operation of camera lens, sensing panel, microphone and/or scanning instrument of the user device 100 by the user. The device identifier may be at least one of field code of the user device 100, device serial number of the user device 100, mobile device identifier of the user device 100, Internet Protocol address of the user device 100, media access control address of the user device 100 and unique device identifier of the user device 100, and the device identifier may be automatically extracted by the user device 100 in response to request of the provider authentication device 300.

At Step S305, the provider authentication device 300 may receive of the device identifier and determine validity of the device identifier. "No" indicates that the device identifier is invalid and user device 100 may be a problematic device, Step S308 may then be executed to erase the second biometric data, and Step S310 may be executed to convey (exempli gratia, through the client device 200) rejection notice of service access request for the user to the user device 100. "Yes' indicates that the device identifier is valid and the authentication in later steps may be proceeded.

At Step S306, the provider authentication device 300 may receive of the second biometric data, process the second biometric data to generate second tokenized biometric data, and concatenate the identity identifier with the second tokenized biometric data to generate authentication data. In here, based on the same data tokenization technique for generating the first tokenized biometric data may be utilized to generate the second tokenized biometric data from the second biometric data. Therefore, the privacy data contained in the second biometric data of the user uploaded during the authentication phase may also be prevented from leaking. Similarly, other de-identification operations and/or encryption operations may also be performed on the second biometric data to obtain the second tokenized biometric data to further ensure security of the second biometric data during the identity authentication task. Additionally, the authentication data generated from Step S306 may be formed by splicing the identity identifier and the second tokenized biometric data in a same order or combination as the user enrollment identifier and the first tokenized biometric data contained in the authentication baseline data. For example, if the identity identifier is expressed as "USRID1235XX" and the second tokenized biometric data is expressed as "USRIMG2468XX", the generated authentication data may be expressed as "USRID1235XX- USRIMG2468XX."

At Step S307, the provider authentication device 300 may compare difference between the authentication data and the authentication baseline data to generate an authentication result, and determine if the authentication result for authenticating the authentication data using the authentication baseline data is successful. "No" indicates that the authentication has failed, Step S308 may then be executed to erase the second biometric data, and Step S310 may be executed to convey (exempli gratia, through the client device 200) rejection notice of service access request for the user to the user device 100. "Yes' indicates that the authentication is successful, Step S308 may then be executed to erase the second biometric data, and Step S309 may be executed to convey (exempli gratia, through the client device 200) approval notice of service access request for the user to the user device 100, thereby to allow the user operate the user device 100 and proceed accessing the financial service at the client device 200.

For example, if the authentication data is expressed as "USRID1235XX- USRIMG2400XX" and the authentication baseline data is expressed as "USRID1235XX- USRIMG2468XX," the provider authentication device 300 may determine the authentication result for authenticating the authentication data using the authentication baseline data has failed, Step S308 and Step S310 may then be executed, and the user may be prohibited from accessing the financial service. If the authentication data and the authentication baseline data are both expressed as "USRID1235XX-USRIMG2468XX," the provider authentication device 300 may determine the authentication result for authenticating the authentication data using the authentication baseline data to be successful, Step S309 and Step S310 may then be executed, and the user is allowed to access the financial service. In other words, only difference between the authentication data and the authentication baseline data is needed for identity authentication for the user in need of accessing the financial service. Therefore, complex algorithms and encode/decode operations may be omitted, and configuration cost for moving the financial service to the cloud may be cut down significantly. Further, regardless of successfulness of the authentication, the second biometric data may be erased upon utilization, the system 1 may not preserve records of the second biometric data, zero-knowledge proof for user authentication operation may be achieved and leaking of privacy of the user may be prevented.

Based on the above, the authentication system, the authentication method and the computer readable medium of the invention is beneficial for realizing user identification task based on zero-knowledge proof, de-identifying exchange of sensitive or personal data involved in moving service to the cloud, simplifying steps required for user authentication operation, and reducing risk of authentication information required for user authentication operation being leaked to or identified by a third party.

## Claims

1. An authentication system (1), comprising:
a provider authentication device (300);
a storage device (400) coupled to the provider authentication device (300);
an user device (100) coupled to the provider authentication device (300); and
a client device (200) coupled to the provider authentication device (300) and the user device (100), wherein
during an enrolling phase with the authentication system:
the user device (100) is configured to:
confirm enrollment request of an user; and
transmit the enrollment request to the client device (200);
the client device (200) is configured to:
receive the enrollment request;
generate enrollment dataset according to the enrollment request, the enrollment dataset comprises user enrollment identifier and first biometric data of the user; and
transmit the enrollment dataset to the provider authentication device (300);
the provider authentication device (300) is configured to:
receive the enrollment dataset;
process the first biometric data of the enrollment dataset to generate first tokenized biometric data;
concatenate the user enrollment identifier with the first tokenized biometric data to generate authentication baseline data; and
store the authentication baseline data to the storage device (400) and erase the first biometric data from the enrollment dataset; and
the storage device (400) is configured to preserve the authentication baseline data; and during an authentication phase with the authentication system:
the user device (100) is configured to:
receive service access request and second biometric data of the user;
transmit the service access request to the client device (200); and
transmit the second biometric data to the provider authentication device (300);
the client device (200) is configured to:
receive the service access request; and
transmit identity identifier of the user to the provider authentication device (300) according to the service access request; and
the provider authentication device (300) is configured to:
receive the identity identifier and retrieve the authentication baseline data from the storage device (400) according to the identity identifier, the user enrollment identifier of the authentication baseline data correspond to the identity identifier;
receive the second biometric data;
process the second biometric data to generate second tokenized biometric data;
concatenate the second tokenized biometric data with the identity identifier to generate authentication data; and
when an authentication result for authenticating the authentication data using the authentication baseline data is successful, approve the service access request from the user device (100) and erase the second biometric data.

2. The authentication system (1) of Claim 1, wherein:
the user device (100) comprises an automated teller machine and/or a mobile device carrying a financial service application;
the enrollment request is a bank account enrollment request; and
the service access request is a financial service access request.

3. The authentication system (1) of Claim 1, wherein during the enrollment phase:
the user device (100) is further configured to:
confirm enrollment data and the first biometric data set by the user using the user device (100); and
transmit the enrollment data and the first biometric data to the client device (200);
the client device (200) is further configured to:
receive the enrollment data and the first biometric data;
generate the user enrollment identifier using the first biometric data; and
generate the enrollment dataset using the user enrollment identifier and the first biometric data; and
the provider authentication device (300) is further configured to:
after the authentication baseline data is stored in the storage device (400), transmit the user enrollment identifier of the enrollment dataset to the client device (200).

4. The authentication system (1) of Claim 3, wherein:
the enrollment data comprises username of the user, user passcode of the user, identity information of the user and/or signature information of the user; and
the first biometric data comprises facial recognition information of the user, fingerprint recognition information of the user, vein recognition information of the user, voice pattern recognition information of the user, iris recognition information of the user and/or signature recognition information of the user.

5. The authentication system (1) of Claim 1, wherein during the authentication phase:
the user device (100) is further configured to:
confirm service access data imported by user using the user device (100); and
transmit the service access data to the client device (200);
the client device (200) is further configured to:
generate the identity identifier of the user according to the service access data; and the provider authentication device (300) is further configured to:
when the authentication result for authenticating the authentication data using the authentication baseline data is successful, enable the client device (200) to provide service to the user through the user device (100) according to the service access data.

6. The authentication system (1) of Claim 5, wherein:
the service access data comprises username of the user, user passcode of the user, identity information of the user, signature information of the user, debit card identifier of the user, debit card certificate number of the user, payment request information of the user, collection request information of the user, deposit/foreign exchange request information of the user, loan request information of the user, account management request of the user, transaction information of the user and/or financial management request of the user; and
the second biometric data comprises facial recognition information of the user, fingerprint recognition information of the user, vein recognition information of the user, voice pattern recognition information of the user, iris recognition information of the user and/or signature recognition information of the user.

7. The authentication system (1) of Claim 1, wherein during the authentication phase:
the user device (100) is further configured to:
extract device identifier of the user device (100); and
transmit the device identifier to the provider authentication device (300); and
the provider authentication device (300) is further configured to:
receive the device identifier; and
when the device identifier is authenticated to be invalid, reject the service access request from the user device (100) and erase the second biometric data.

8. An authentication method, comprising:
providing an authentication system (1), the authentication system (1) comprises an user device (100), a client device (200), a provider authentication device (300) and a storage device (400);
during an enrollment phase:
the user device (100) confirming enrollment request of an user, and transmitting the enrollment request to the client device (200);
the client device (200) receiving the enrollment request, generating enrollment dataset according to the enrollment request and transmitting the enrollment dataset to the provider authentication device (300), wherein the enrollment dataset comprises user enrollment identifier and first biometric data of the user;
the provider authentication device (300) receiving the enrollment dataset, processing the first biometric data of the enrollment dataset to generate first tokenized biometric data, concatenating the user enrollment identifier and the first tokenized biometric data to generate authentication baseline data, storing the authentication baseline data in the storage device (400) and erasing the first biometric data from the enrollment dataset; and
the storage device (400) preserving the authentication baseline data; and
during an authentication stage:
the user device (100) receiving service access request and second biometric data of the user, transmitting the service access request to the client device (200), and transmitting the second biometric data to the provider authentication device (300);
the client device (200) receiving the service access request, transmitting the identity identifier of the user to the provider authentication device (300) according to the service access request; and
the provider authentication device (300) receiving the identity identifier, retrieving the authentication baseline data from the storage device (400) according to the identity identifier, receiving the second biometric data, processing the second biometric data to generate second tokenized biometric data, concatenating the second tokenized biometric data and the identity identifier to generate authentication data, and confirming authentication result for authenticating the authentication data using the authentication baseline data, and approving the service access request from the user device (100) and erasing the second biometric data when the authentication result indicates to be successful, wherein the user enrollment identifier of the authentication baseline data correspond to the identity identifier.

9. The authentication method of Claim 8, wherein:
the user device (100) comprises an automated teller machine and/or a mobile device carrying a financial service application;
the enrollment request is a bank account enrollment request; and
the service access request is a financial service access request.

10. The authentication method of Claim 8, further comprising:
during the enrollment phase:
the user device (100) confirming enrollment data and the first biometric data set by the user using the user device (100) and transmitting the enrollment data and the first biometric data to the client device (200);
the client device (200) receiving the enrollment data and the first biometric data, generating the user enrollment identifier using the first biometric data, and generating the enrollment dataset using the user enrollment identifier and the first biometric data; and
the provider authentication device (300) transmitting the user enrollment identifier of the enrollment dataset to the client device (200) after the authentication baseline data is stored in the storage device (400).

11. The authentication method of Claim 10, wherein:
the enrollment data comprises username of the user, user passcode of the user, identity information of the user and/or signature information of the user; and
the first biometric data comprises facial recognition information of the user, fingerprint recognition information of the user, vein recognition information of the user, voice pattern recognition information of the user, iris recognition information of the user and/or signature recognition information of the user.

12. The authentication method of Claim 8, further comprising:
during the authentication phase:
the user device (100) confirming service access data imported by user using the user device (100), and transmitting the service access data to the client device (200);
the client device (200) generating the identity identifier of the user according to the service access data; and
the provider authentication device (300) enabling the client device (200) to provide service to the user through the user device (100) according to the service access data when the authentication result indicates to be successful.

13. The authentication method of Claim 12, wherein:
the service access data comprises username of the user, user passcode of the user, identity information of the user, signature information of the user, debit card identifier of the user, debit card certificate number of the user, payment request information of the user, collection request information of the user, deposit/foreign exchange request information of the user, loan request information of the user, account management request of the user, transaction information of the user and/or financial management request of the user; and
the second biometric data comprises facial recognition information of the user, fingerprint recognition information of the user, vein recognition information of the user, voice pattern recognition information of the user, iris recognition information of the user and/or signature recognition information of the user.

14. The authentication method of Claim 8, further comprising:
during the authentication phase:
the user device (100) extracting device identifier of the user device (100), and transmitting the device identifier to the provider authentication device (300); and
the provider authentication device (300) receiving the device identifier, authenticating validity of the device identifier, and rejecting the service access request from the user device (100) and erasing the second biometric data when the device identifier is authenticated to be invalid.

15. A computer readable medium storing a computer executable code, upon executed, the computer executable code implement the method according to claim 8.
